# EUROPEAN PATENT APPLICATION

(11) **EP 4 654 532 A1**
(43) Date of publication of application: **26.11.2025**
(21) Application number: 24177114.6
(22) Date of filing: 21.05.2024
(51) Int. Cl.: H04L 12/18, H04L 65/403

(54) **METHOD FOR PRIVACY-AWARE DOCUMENT DISSEMINATION IN ONLINE CONFERENCES**

(71) Applicant: Unify Beteiligungsverwaltung GmbH & Co. KG, 81739 München (DE)
(72) Inventor: Brochonski, Michael, 82620-265 Curitiba (BR); Tsokana, Sofia, 15343 Agia Paraskevi (GR); Lederer, Thomas, 82211 Herrsching (DE); Tsiatsikas, Zisis, 55534 Thessaloniki (GR)
(74) Representative: Schaafhausen, Anne

(57) **Abstract**

The invention relates to a method for the secure and efficient distribution of documents in online conferences, ideal for applications such as telehealth conferences, e-consultations, and other collaborative settings involving sensitive information. By integrating Speech-to-Text and AI technologies, the invention allows a host to specify sections of a document for sharing, automatically adjusting access based on the clearance level of each participant. Thus, the present invention enhances the efficiency and security of document sharing in virtual collaborative environments, representing an advancement over previous practices by providing a solution that balances accessibility with confidentiality.

## Description

The present invention relates to a method and a system for privacy-aware document dissemination in online conferences.

Online conferences, also known as virtual conferences or webinars, are events that take place entirely over the internet, allowing participants to attend remotely from anywhere with an internet connection. These conferences offer numerous benefits and have become increasingly popular, especially in recent years. Online conferences involving sensitive data, such as those related to healthcare, finance, or proprietary research, require special considerations to ensure data security and confidentiality, particularly in contexts where sensitive information is shared among participants with varying clearance levels.

In environments such as healthcare, legal, and corporate sectors, the need to protect sensitive data is high. Managing who gets access to what information can be complex and prone to error. Accessing relevant sections of documents during online conferences can be cumbersome and time-consuming, especially in complex or large documents. Methods to share sensitive data in online conferences used in the prior art such as verbally directing participants to specific sections, or manually redacting and distributing documents, often lack the necessary security measures to ensure that only authorized participants can access specific parts or sections of a document or file. Although more secure than email or basic file sharing, the use of secure document sharing platforms that require users to log in and access documents based on their permissions does not provide real-time, dynamic access control during live meetings. Also, this method is usually tied to a whole file and not to the contents of individual sections of said file.

Further, role-based access control (RBAC) systems have been implemented in the prior art to grant or restrict access to documents based on the roles of participants within an organization. However, these systems are not always integrated with real-time communication tools, limiting their effectiveness in dynamic meeting scenarios.

Thus, ensuring a seamless user experience for participants with different roles, responsibilities, and clearance levels in an online conference is needed. In sectors such as healthcare, legal and finance, regulations need to be present to determine who can view sensitive data.

Therefore, the present invention is based on the object to overcome the disadvantages of the prior art and to provide a method for privacy-aware document dissemination in online conferences and a corresponding system.

This object is solved by a method having the features according to claim 1 and a corresponding system having the features of claim 10.

Preferred embodiments of the invention are defined in the respective dependent claims.

According to the invention, a method for privacy-aware document dissemination in online conferences is provided, the method comprising the steps of: adding, by a presenter of an online conference, a document into a collaboration tool; activating, by the collaboration tool, a Speech-to-Text entity, upon verbally mentioning a section of the document by the presenter; generating, by the Speech-to-Text entity, a transcription of the verbally mentioning of a section and sending said transcription to an artificial intelligence (Al) agent; identifying, by the Al agent, the document section the host wants to discuss using said transcription; fetching, by the Al agent, participant permissions for the document section at a permission database (DB); evaluating, by the AI agent, the document metadata, the access rights and the content sensitivity of the document section; creating, by the AI agent, participant-specific copies of the document according to their access level; and generating, by the AI agent, one or more clickable links to lead participants directly to the relevant section of their personalized document copy.

According to a preferred embodiment, if no participant permissions are available, the method further comprises consulting, by the AI agent, an organizational chart comprising the participants' roles and responsibilities within an organization to assign access rights to each participant.

According to another preferred embodiment, the method further comprises the step of retrieving, by the AI agent, a file comprising the company's security policies and guidelines on information sharing at a policy DB.

The AI agent may evaluate the contents of the document of the conference, including metadata and sensitivity levels, in light of the permissions either fetched at the permissions DB or at the organizational chart. This includes analyzing text, images, and embedded content for comprehensive security. This evaluation may be done in assistance with a file comprising the company's security policies and guidelines on information sharing saved at the policy DB. The AI agent may have access to this file and may retrieve information from it using varied techniques such as Retrieval Augmented Generation (RAG) to assist.

According to another preferred embodiment, if concerns about the access level exist, a warning is raised by the AI agent.

If a warning is raised by the AI agent, a popup window may open on the file owner's monitor indicating the respective concern.

Upon raising a warning by the AI agent, some users may get granted partial access, and some participants may get granted only redacted access according to their access rights. This may be done by the file owner through the AI agent.

According to still another preferred embodiment, the access level is selected from full access, partial access and redacted access.

According to yet another preferred embodiment, the different copies are delivered individually to the users.

According to still another preferred embodiment, the different copies are presented as streams to the users.

According to the present invention, every user may receive a link that is created automatically by the AI agent. Said link may direct each user to their respective personal copy of the file. At the same time, each user may receive a personalized stream of the screen sharing session which shows the document with the content that said user is allowed to view according to his/her access level.

Further, according to another preferred embodiment, the online meeting is in the field of the legal and compliance sector, the government and public sector, the healthcare and patient sharing data sector, the corporate training and onboarding sector, the financial services sector, the research and development sector, the customer support and services sector, or the education and remote learning sector.

According to another aspect of the present invention, a system for privacy-aware document dissemination in online conferences is provided which is configured to perform the method for privacy-aware document dissemination in online conferences.

According to a preferred embodiment, the system comprises a collaboration tool, a Speech-to-Text entity, a permission DB, an organizational chart, a policy DB, an AI agent and a file DB.

According to yet another preferred embodiment, the collaboration tool comprises a conference server.

Thus, the present invention provides a method to enhance document security and accessibility during online conferences, tailoring access to sensitive information based on individual clearance levels through Speech-to-Text and AI technologies. Therefore, the present invention improves operational efficiency and data protection, offering an advantage in secure and efficient collaborative environments.

In various sectors such as healthcare, legal, and finance, the need to protect sensitive data is high. As already described above, document sharing methods in online conferences used in the prior art often lack the necessary security measures to ensure that only authorized participants can access specific parts of a document. The present invention provides a method to mitigate unauthorized access risks by integrating security protocols that tailor document access in real-time based on participants' clearance levels. Further, by using Speech-to-Text technology to identify and share exact document sections through clickable links, the invention significantly improves accessibility and efficiency, allowing participants to focus more on the discussion rather than navigating documents. Also, by providing personalized access to document contents according to the present invention, each participant engages with the content relevant and permissible to them.

Thus, in the meaning of the present invention, the document when provided with redacted/sensitive data is always a copy, which is linked to the original file, with the contents that should not be present, taken out and with just a redacted placeholder in place. Thus, when a file is shared and a user may have some of its contents redacted, a copy of the original file is made which is directly tied to the original file, wherein all contents that are redacted may be replaced with a placeholder. If the user who received said copy with the redacted information later on communicates that he/she needs access to the redacted information, this is going directly to the file owner together with organizational information about the person asking access about said redacted information of the file. Thus, the copy of the original file may not actually contain the redacted information, but it can trigger an access information permission if needed. This can be done as the redacted information might contain a uniform resource locator (URL) or embedded URL that when activated may start the action of asking for permission. As each copy is customized for a user or group of users it has been shared with, these URLs can be customized to fit each user or a group of users.

Thus, the invention ensures that document sharing adheres to organizational policies and legal guidelines, automatically enforcing rules on information access and sharing. By automating the customization of document content access based on real-time analysis of participants' roles and clearance, the risk of human error is reduced, and the integrity of sensitive discussions is enhanced.

In the meaning of the present invention, the terms "document" and "file" are used interchangeably throughout the present description to refer to a written, printed, or electronic piece of information that provides evidence, records data, communicates ideas, or serves as a reference. A document or file can take various forms, including text files, spreadsheets, presentations, images, videos, and more. They are used for a wide range of purposes, such as recording official information, conveying instructions, sharing knowledge, providing evidence of transactions, or facilitating communication. Documents and files can be created, edited, stored, and shared using different tools and mediums, depending on their intended use and the preferences of the individuals or organizations involved.

In the meaning of the present invention, the boundaries of a section of the document the presenter wants to discuss are determined by analyzing the text from a first selection and filter said text with an AI agent to track the boundaries. A first selection may include a section from the document/file that fits some broader criteria: 1) The section or sections of the document that fit the description from the presenter/sharing user/host as analyzed by the AI agent. 2) A direct mention of a section of the document (such as a table, figure, page, slide, etc.). Thus, the first selection helps to put an initial filter on which section or sections of the document are going to be evaluated more critically or shared in later stages of the online conference with the AI agent.

In the meaning of the present invention, a "file owner" refers to an individual who participates in an online conference as a presenter, sharing user and/or host, which has reading, writing and sharing permissions of a given file.

In the meaning of the present invention, the terms "presenter", "sharing user" and "host" are used interchangeably throughout the present description to refer to an individual who delivers information, shares insights, or leads discussions on a specific topic or subject matter to an audience of attendees. Presenters are typically experts or knowledgeable individuals in their field who are invited to speak or present at a conference. Their role involves communicating ideas, research findings, perspectives, or experiences to the audience in a clear, engaging, and informative manner. Presenters may use various methods such as speeches, lectures, multimedia presentations, demonstrations, or interactive sessions to convey their message and engage with the audience. Further, presenters have permissions to enable features such as screen sharing and recording. Thus, dynamic document sharing is mostly done by the person holding the conference but may also be applied to participants of the conference as long as they have basic control rights in the conference tool. Therefore, presenters are persons actively participating by sharing documents in the online conference and are to be distinguished from "watchers" or "guests" of the online conference who are not actively participating in the conference but only listen to and/or watch the conference.

In the meaning of the present invention, the terms "user" and "participant" are used interchangeably throughout the present description to refer to an individual who attends the event with the purpose of engaging in discussions, learning, networking, or contributing to the exchange of ideas and information. Users or participants can include professionals, academics, researchers, students, industry representatives, policymakers, and other stakeholders relevant to the conference's theme or topic. Their roles may involve attending presentations, workshops, panels, or other sessions, actively participating in discussions, asking questions, sharing insights or experiences, networking with fellow attendees, and potentially presenting their own research or work. As already mentioned above, a participant may be only watching or listening to the conference, referred to as "guest" in the present invention, but it is also possible for a participant to actively participate in the conference by sharing a document, e.g. if he/she has basic control rights in the conference tool.

In the meaning of the present invention, the term "Al agent" refers to an Artificial Intelligence system that in its collective functions can perform agentic actions. Thus, it can receive input data from multiple sources, has parsing mechanisms for said sources, has reasoning, filtering and clustering stages which can then be used to make a decision on suggestions and actions pertained to the functionality required by the present invention.

It has also to be noted that aspects of the invention have been described with reference to different subject-matters. In particular, some aspects or embodiments have been described with reference to product type claims, whereas other aspects have been described with reference to method type claims. However, a person skilled in the art will gather from the above and the following description that, unless otherwise notified, in addition to any combination between features belonging to one type of subject-matter also any combination between features relating to different types of subject-matters is considered to be disclosed with this text. In particular combinations between features relating to the product type claims and features relating to the method type claims are considered to be disclosed. In addition, features relating to one of the embodiments may be combined with other features of another embodiment, the drawings or the claims, where possible. The invention and embodiments thereof will be described below in further detail in connection with the drawing(s).
- Fig. 1: shows a collaboration tool conference architecture according to an embodiment of the invention;
- Fig. 2: shows a flowchart of the method for privacy-aware document dissemination in online conferences according to another embodiment of the invention;
- Fig. 3: shows a flowchart of the method for privacy-aware document dissemination in online conferences according to another embodiment of the invention;
- Fig. 4: shows the distribution of different copies of one document according to another embodiment of the invention;
- Fig. 5: shows the distribution of different copies of one document according to another embodiment of the invention.

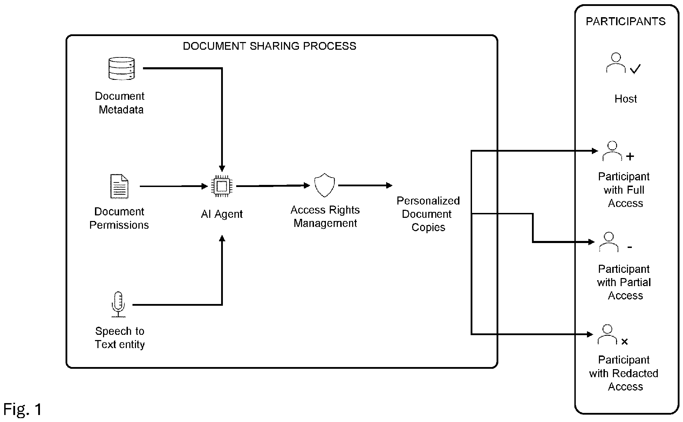

Fig. 1 schematically shows a collaboration tool conference architecture according to an embodiment of the invention. In the context of a collaboration tool conference with multiple participants, securely and efficiently sharing documents, especially those containing sensitive information, may be enhanced according to the present invention by integrating Speech-to-Text and AI technologies. In the prior art, when a host wants to share a specific section of a document, the presenter verbally communicates the section he/she wants to share, e.g., "Please find the financial results on table 6, page 4". The participants may then manually search for the mentioned section on their own, which can be challenging for those with disabilities or those who may have missed verbal instructions. Further, said method lacks precise security and accessibility measures for participants with varying clearance levels. Ensuring sensitive information remains protected because they are only accessible to authorized participants, without the ability to tailor document access according to individual clearance levels is challenging.

As is shown in Fig. 1, in addition to the host/sharing user or presenter, an online conference is attended by participants with varying access levels, being full access, partial access and redacted access. The inventive system comprises different components being the document metadata entity, a document permissions entity, a Speech-to-Text entity, an AI agent, an access rights management entity, and finally the personalized document copies that may be redacted according to the access level of the various participants.

The Speech-to-Text entity sends a transcription of a verbal mentioning of a document section by the presenter to the AI agent. The AI agent identifies the document section due to said transcription, and fetches participant permissions and document metadata from the respective entities. The AI agent also evaluates access rights and generates personalized document copies taking into account the individual access levels of each participant. Thus, a participant having full access may get a document copy containing the whole document with all sensitive data being legible, a participant having partial access may get a copy containing only those parts of the document which sensitivity matches the access level with all sensitive data in said parts being legible, and a participant having redacted access may get a copy containing either the whole document or only parts of the document wherein some sensitive data have been redacted.

According to the present invention, for participants who do not have clearance for the document section which is referred to in the conference, the presenter may get an alert in the form of a popup window that will make clear which participant(s) do(es) not have access on the respective section of the document. The text may be blurred for those participants who do not have clearance and if the presenter wants to share information about this section, the relevant pieces of information may need to be protected and not conveyed to participants that do not have access. In the meaning of the present invention, this may be done by directly hashing the information out. Thus, the actual contents are not present when redacted, such as using a placeholder to make sure that the document/file format and how the document is organized does not get changed. If a user of the redacted file needs access to the part which is blurred, a new copy with the non-redacted section of the document may be provided upon analysis of the access rights of said respective user.

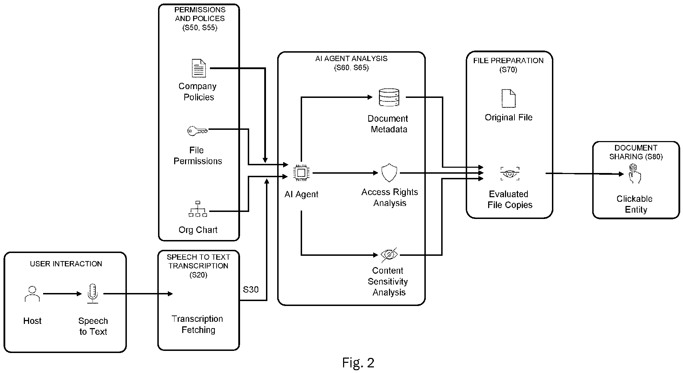

Fig. 2 shows a flowchart for file sharing in online conferences according to another embodiment of the present invention.

A host of an online conference may want to share a detailed document with the participants. The document contains sensitive financial data only certain participants are cleared to see. The host may add the document to share into a collaboration tool in step S10 (not shown). After having added the document, the host may verbally indicate a section of interest in the document that is under discussion to the participants. Instantly, the Speech-to-Text entity may be activated in step S20 to transcribe the verbal indication by the host into text and sending said transcription to an AI agent (step S30). The AI agent identifies the document section the host wants to share using said transcription in step S40 (not shown). Further, the AI agent may analyze who has access to view the sensitive data of the section by fetching the various user permissions for the indicated section at a permission DB in step S50. If there are no user permissions available, the AI agent may consult an organizational chart comprising the participants' roles and responsibilities within the organization to assign access rights to each participant in step S55 based on said organizational chart. In step S60, the AI agent may further analyze the documents' metadata and the content sensitivity of the section in question. If the participants' permissions are not available, the AI agent may also retrieve a file with the companies' security policies and guidelines on information sharing in step S65 from a policy DB. With these analyses, the AI agent may create customized copies of the document according to the access level of each participant in step S70. In step S80, the AI agent may generate clickable links that leads each participant to the relevant part of their personalized document copy. For example, as mentioned above, a participant having full access level receives the whole document including all sensitive data, while another participant having only redacted access level gets a version where sensitive data are redacted.

This seamless integration of Speech-to-Text and AI technology not only ensures that the various participants access only what they're cleared to see but also directs them to the exact section the presenter wants to discuss. The meeting proceeds smoothly, with each participant engaging with the appropriate content, safeguarding sensitive information, and enhancing collaborative efficiency.

Thus, the present invention allows for the automatic customization of the document contents, granting each participant access that aligns with their clearance level and the company's policies.

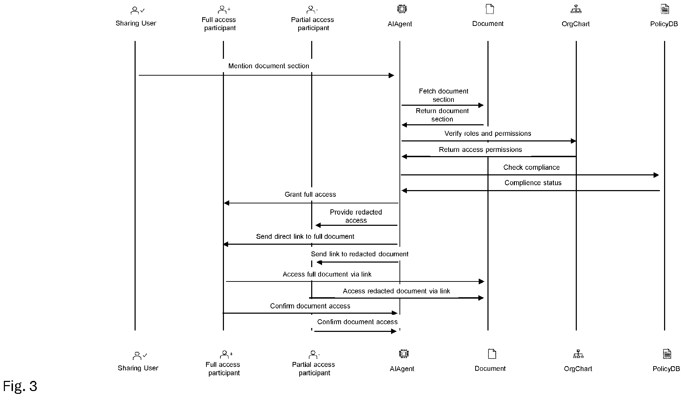

Fig. 3 shows a flowchart of the collaboration tool file sharing of still another embodiment of the present invention. A presenter/sharing user may initiate the method by adding a file to share within a collaboration tool (not shown). During the conference, the presenter may verbally mention a specific section of the document to share or provide particular access levels of the respective participants for different sections to the AI agent. The Collaboration Tool may facilitate the interaction between various components of the system to manage the sharing and access control of the document. Upon verbally mentioning a section of the document by the presenter, the collaboration tool may activate a Speech-to-Text entity (not shown) which may transcribe the verbal requests or instructions related to the document into text. The transcribed text may then be sent to the AI agent for further processing. The permissionsDB (not shown) may be queried by the AI agent to fetch the permissions associated with the users involved in the online conference. Said DB determines what level of access each user has based on their roles and the document's confidentiality level. The organizational chart (OrgChart) and the policyDB may be involved in evaluating the access level and fetching company policies related to the document sharing. The organizational chart may help in understanding the organizational structure and roles of the users, which may aid in deciding the various access levels. The policyDB may store the company's policies on document sharing, ensuring that the sharing process adheres to organizational guidelines. The AI agent may evaluate the file metadata, access rights, and sensitivity from the fileDB (not shown) and evaluate those data to determine the appropriate access level for each user. Additionally, it may interpret and evaluate the sharing user's verbal instructions, ensuring they align with the document's metadata and company policies, handling the document's sensitivity appropriately. If there are concerns about a user's access level or compliance with the instructions, the AI agent may raise warnings, grant partial access, or provide redacted access to sensitive parts of the document.

Based on these evaluations, the AI agent may create customized copies of the document for each user. These copies vary in content visibility depending on the user's access level determined earlier. The AI agent may generate clickable links that direct each user to the appropriate part of the document tailored to their access level. This ensures that each user interacts only with the information they are cleared to see, maintaining confidentiality and compliance with company policies.

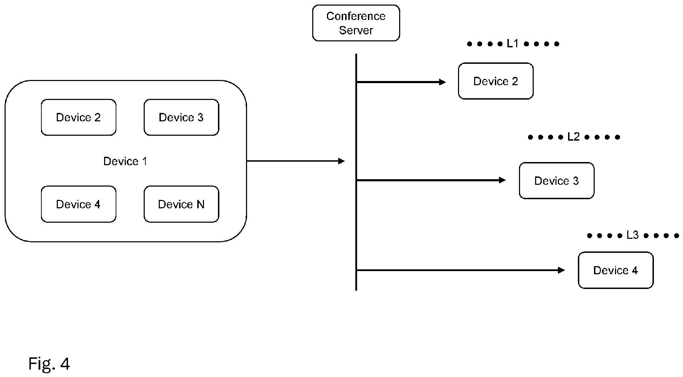

Fig. 4 shows the distribution of different, customized copies of the shared document according to an embodiment of the present invention. The participants of the conference each receive a different copy of the shared document as described above based on their respective access level. It may be beneficial for the presenter to have feedback about the delivery of the customized copies of the shared document so that he/she can view and access on a real-time fashion the content which is delivered to the participants. Said feedback is shown in Fig. 4 by offering replicated copies of the delivered copies (Device 2, Device 3, Device 4, Device N) to the presenter's screen (Device 1). Thus, all the customized copies delivered to the participants by clickable links (L1, L2, L3) are duplicated in the presenters' screen (Device 1) so that he/she can efficiently coordinate the presentation flow. Fig. 4 also shows the different levels on which the users reside, in terms of access rights and clearance. Thus, user of Device 2 has full access, user of Device 3 has partial access, and user of Device 4 has redacted access. All the users are connected to a conference using the conference server that shares and processes the different streams.

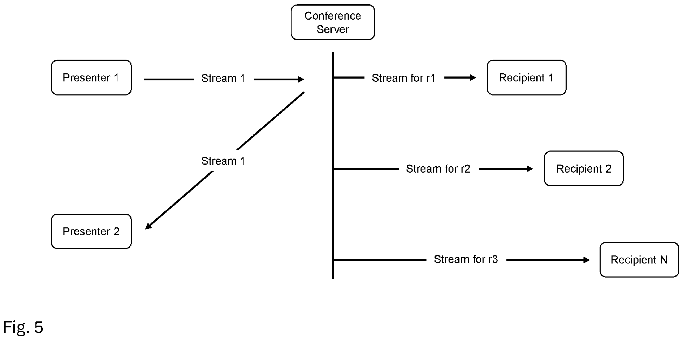

Fig. 5 shows the distribution of customized copies of the shared document according to another embodiment of the present invention. In this embodiment, the participants receive different stream content based on what is presented and based on their individual access level. There are two presenters (Presenter 1 and Presenter 2) which represent two people sharing content in the conference and having the same access level. Due to said same access level, Presenter 2 gets the same stream delivered as Presenter 1, namely Stream 1. As already mentioned above, every participant (Recipient 1, Recipient 2, Recipient N) may receive a different version of the shared content explicitly fixed to the clearance level that the respective user possesses. Therefore, Recipient 1 may get stream for r1, Recipient 2 may get stream for r2, etc. The main difference with the embodiment shown in Fig. 4 relies on the fact that the stream itself changes and not necessarily the file that is presented. Therefore, the delivery of different streams between the presenters and the participants is shown. Thus, the recipients receive a stream version that corresponds to their access rights and the rest of the presenters receive a different copy to the recipient streams, namely that of the presenter's view. Thus, the unique stream delivery may not necessarily be accompanied by different versions of the same file. This may happen only if it is required to share the actual file to the users.

Therefore, the present invention provides a method using integrated Speech-to-Text technology together with AI technology to automatically identify and share specific document sections mentioned by the host. This integration enhances user experience by providing immediate access to relevant content. Further, AI is employed to evaluate each participant's clearance level against the document's sensitivity in conjunction with company's security policy guidelines, automatically customizing access. This ensures that sensitive information is only accessible to authorized participants, an improvement over generic access control. The inventions' ability to incorporate and operate within the framework of a company's specific security policies and guidelines for information sharing represents a customizable and adaptable approach, allowing for a more secure and policy-compliant document sharing process. Access to documents is tailored in real-time, providing full or partial access based on the participant's clearance level. This dynamic adjustment of access rights is a novel approach that enhances both security and accessibility. The AI agent conducts a thorough analysis of the document, including text, images, and embedded content, to ensure comprehensive security. This level of detail in evaluating document sensitivity and applying access controls is more advanced than document sharing solutions of the prior art that usually apply to a whole file and not specifically to the contents of individual sections. The generation of clickable links that lead participants directly to the relevant sections of their personalized document copy improves navigation and user experience, making it easier for participants to follow along with the discussion.

It should be noted that the term "comprising" does not exclude other elements or steps and the "a" or "an" does not exclude a plurality. Further, elements described in association with different embodiments may be combined.

It should also be noted that reference signs in the claims shall not be construed as limiting the scope of the claims.

### Reference numerals

- S10 - S80: steps of the inventive method
- L1: link 1
- L2: link 2
- L3: link 3
- r1: Recipient 1
- r2: Recipient 2
- r3: Recipient 3

## Claims

1. A method for privacy-aware document dissemination in online conferences, wherein the method comprises the steps of:
- S10 adding, by a presenter of an online conference, a document into a collaboration tool;
- S20 activating, by the collaboration tool, a Speech to Text entity, upon verbally mentioning a section of the document by the presenter;
- S30 generating, by the Speech-to-Text entity, a transcription of the verbally mentioning of a section and sending said transcription to an artificial intelligence, Al, agent;
- S40 identifying, by the AI agent, the document section the host wants to discuss using said transcription;
- S50 fetching, by the AI agent, participant permissions for the document section at a permission database, DB;
- S60 evaluating, by the AI agent, the document(s) metadata, the access rights and the content sensitivity of the document section;
- S70 creating, by the AI agent, participant-specific copies of the document; and
- S80 generating, by the AI agent, one or more clickable links to lead participants directly to the relevant section of their personalized document copy.

2. The method according to claim 1, wherein, if no participant permissions are available in step S50, the method further comprises:
- S55 consulting, by the AI agent, an organizational chart comprising the participants' roles and responsibilities within the organization to assign access rights to each participant.

3. The method according to any one of the previous claims, wherein the method further comprises the step of:
- S65 retrieving, by the AI agent, a file comprising the company's security policies and guidelines on information sharing from a policy DB.

4. The method according to any one of the previous claims, wherein, if concerns about the access level for the various participants exist, a warning is raised by the AI agent.

5. The method according to any one of the previous claims, wherein the access level is selected from full access, partial access and redacted access.

6. The method according to any one of the previous claims, wherein different copies of the document are created.

7. The method according to claim 6, wherein the different copies are delivered individually to the users.

8. The method according to claim 6, wherein the different copies are presented as streams to the participants.

9. The method according to any one of the previous claims, wherein the online meeting is in the field of the legal and compliance sector, the government and public sector, the healthcare and patient sharing data sector, the corporate training and onboarding sector, the financial services sector, the research and development sector, the customer support and services sector, and/or the education and remote learning sector.

10. A system for privacy-aware document dissemination in online conferences, wherein the system is configured to perform the method according to any of the claims 1 to 9.

11. The system according to claim 10, wherein the system comprises a collaboration tool, a Speech-to-Text entity, a permission DB, an organizational chart, a policy DB, an AI agent and a file DB.

12. The method according to claim 10, wherein the collaboration tool comprises a conference server.
